# EUROPÄISCHE PATENTSCHRIFT

(11) **EP 0 835 716 B1**
(45) Veröffentlichungstag und Bekanntmachung des Hinweises auf die Patenterteilung: **22.10.2003**
(21) Anmeldenummer: 96111987.2
(22) Anmeldetag: 25.07.1996
(51) Int. Cl.: B23K 35/00, C04B 37/00

(54) **Aktivhartlot zum Hartlöten von Aluminiumoxid-Keramikteilen**
Active brazing alloy for brazing parts of alumina ceramics
Alliage actif pour braser des pièces céramiques d'oxyde d'aluminium

(43) Veröffentlichungstag der Anmeldung: 15.04.1998
(60) Teilanmeldung: 02028891.6
(73) Patentinhaber: Endress + Hauser GmbH + Co.KG., 79689 Maulburg (DE); GfE Metalle und Materialien GmbH, 90431 Nürnberg (DE); Breme, Jürgen, Prof. Dr., 66265 Heusweiler (DE)
(72) Erfinder: HEGNER, Frank, Dr., D-79540 Lörrach (DE); SCHMIDT, Elke Maria, Dipl.-Ing., D-79650 Schopfheim (DE); GÜTHER, Volker, Dr., D-90559 Burgthann (DE); OTTO, Andreas, D-09603 Seifersdorf (DE); BREME, Jürgen, Prof. Dr., D-66265 Heusweiler (DE); MÜLLER, Heinz, Dipl.-Ing., D-66589 Merchweiler (DE); TURNSEK, Jürgen, Dipl.-Ing., D-66333 Völklingen (DE)
(74) Vertreter: Andres, Angelika

(56) Entgegenhaltungen:
- WO-A-94/23078
- DE-B- 1 175 059
- DE-B- 1 201 663
- GB-A- 1 094 052
- RU-C- 2 009 241
- US-A- 4 064 757
- WELDING JOURNAL INCLUDING: WELDING RESEARCH, Bd. 43, Nr. 7, Juli 1964, MIAMI US, Seiten 591-597, XP002022475 C.W. FOX ET AL: "Brazing of Ceramics"
- DATABASE WPI Week 9435 Derwent Publications Ltd., London, GB; AN 94-284385 XP002022476 & RU-A-2 009 241 (A.M. SAVCHENKO ) , 15.März 1994

## Beschreibung

Die Erfindung betrifft Drucksensoren mit Keramikteilen aus Aluminiumoxid, wobei Aktivhartlote zum Hartlöten von der Keramikteilen aus Aluminiumoxid, insb. aus hochreinem Aluminiumoxid, verwendet werden.

Die Gattung zeigt die US-A-5 351 938.

Aktivhartlote sind Legierungen, die mindestens ein zu Sauerstoff affines Element, z.B. Titan, enthalten. Sie greifen die kovalente oder ionische Bindung der hartzulötenden Keramikoberflächen an, benetzen diese und verbinden sich daher chemisch und mechanisch mit diesen. Es sind deshalb beim Hartlöten keinerlei Flußmittel erforderlich.

Ein Teil dieser Aktivhartlote kann, wenn sie im erstarrten Zustand spröde und mechanisch nur schwer oder gar nicht bearbeitbar sind, einerseits mittels des sogenannten Melt-Spinning-Verfahrens in der Form von dünnen Bändern hergestellt werden, die dann mechanisch gut bearbeitet, z.B. gestanzt oder geschnitten, werden können. Es können somit Aktivhartlot-Folien-Formteile, z.B. Ringe, hergestellt werden, die zwischen den hartzulötenden Keramikteilen angeordnet und anschließend mit diesen hart-verlötet werden.

Andererseits kann ein Teil der erschmolzenen und erstarrten Aktivhartlot-Legierungen auch zu Pulver gemahlen und in dieser Form zu einer Aktivhartlotpaste verarbeitet werden, die ebenfalls zwischen den Keramikteilen, z.B. ringförmig, angeordnet und anschließend mit diesen hart-verlötet werden kann.

Beim Hartlöten von Keramikteilen aus Aluminiumoxid, insb. aus 99,9-prozentigem, also hochreinem Aluminiumoxid, wie sie für kapazitive oder resistive Keramik-Drucksensoren, insb. Absolutdruck-Sensoren, benötigt und benutzt werden, muß das Aktivhartlot mehrere Bedingungen gleichzeitig erfüllen, insbesondere die folgenden Eigenschaften haben:
- Die Temperatur, bei der die schon gesinterte Aluminiumoxid-Keramik hartgelötet wird, also die sogenannte Löttemperatur, muß unter 1.000 °C, insb. zwischen 700 °C und 980 °C, liegen.
- Der hartgelötete Bereich, die sogenannte Fügestelle, muß langzeit-hochvakuum-dicht sein, damit z.B. ein während des Aktivhartlötens vorhandenes Vakuum in der Kammer des Drucksensors, die durch das Aktivhartlöten verschlossen wird, unverändert erhalten bleibt.
- Der thermische Ausdehnungskoeffizient der Aktivhartlot-Legierung muß möglichst identisch mit dem der Aluminiumoxid-Keramik sein, und zwar im gesamten, während des Hartlötens überstrichenen Temperaturbereich, damit beim Abkühlen von der Hartlöt-Temperatur auf Umgebungstemperatur minimalste mechanische Spannungen auftreten.
- Die durch das Aktivhartlot vermittelte Festigkeit zwischen den beiden gefügten Keramikteilen muß so gut sein, daß bei Zugbelastung das Zerreißen der Fügestelle nicht schon in ihr, sondern erst in der benachbarten Keramik eintritt.
- Die Druckfestigkeit des Aktivhartlots muß mindestens 2 GPa betragen.
- Ein Aktivhartlot, das diese Forderungen erfüllt, sollte möglichst auch zu den erwähnten Aktivhartlotpasten verarbeitbar sein, da - falls anwendbar - das Melt-Spinning-Verfahren einen großen apparativen Aufwand erfordert und die damit hergestellten Aktivhartlot-Folien somit teuer sind.

Mit Aktivhartloten, wie z.B. den in der US-A 53 51 938 beschriebenen Zirconium/Nickel/Titan-Aktivhartlot-Legierungen, können noch nicht alle oben genannten Randbedingungen völlig zufriedenstellend erfüllt werden. Insbesondere das erwähnte Erfordernis der möglichst genauen Übereinstimmung des thermischen Ausdehnungskoeffizienten von Aktivhartlot und Aluminiumoxid über den gesamten erläuterten Temperaturbereich ist einerseits nicht erfüllt und beruht andererseits erst auf einer neuen Erkenntnis der Erfinder.

Es war daher erforderlich, und das ist die Problemstellung der Erfindung, nach anderen Aktivhartlot-Zusammensetzungen als den vorbeschriebenen Zirconium/Nickel/Titan-Aktivhartlot-Legierungen zu suchen.

Die in den Ansprüchen 1 und 5 definierte Erfindung löst diese Problemstellung. Weitere Ausgestaltungen sind in den abhängigen Ansprüchen 2-4 offenbart.

Ein wesentlicher Vorteil der für die Herstellung der erfindungsgemäßen Sensorenverwendeten Aktivhartlote besteht darin, daß sie bei vergleichbarem Aufwand mit einer höheren Ausbeute im Feinkornbereich pulverisiert werden können als die in der oben genannten US-A 53 51 938 beschriebenen ZrNiTi-Legierungen, wobei das in der US-A 54 31 744 beschriebene Mahlen unter Wasserstoff angewendet werden kann.

Dabei beginnen die erschmolzenen, abgekühlten und unzerkleinerten Stücke der Aktivhartlot-Legierungen in der Wasserstoff-Atmosphäre bereits bei einem Absolutdruck von ca. 200 kPa (= 2 bar) zwischen 100 °C und 150 °C in ein Hydrid-Pulver der Legierung (Partikel-Durchmesser in der Größenordnung kleiner als 300 µm) zu zerfallen. Dieses Pulver läßt sich in einer Mühle, z.B. in einer Kugelmühle, unter Wasserstoff-Überdruck mit geringem Mahlenergie-Einsatz zu Pulvern mit einer gewünschten mittleren Partikelgröße in der Größenordnung von 10 µm, z.B. 12 µm, vermahlen. Die Wasserstoff-Entfernung kann später während des Lötprozesses erfolgen.

Das gesamte Pulver-Herstellverfahren, nämlich Hydrieren, Vermahlen und Aussieben, erfolgt unter Ausschluß von Luftsauerstoff. Die Vermahlung, Lagerung und Verpackung werden jeweils unter Wasserstoff- oder Schutzgas-Überdruck vorgenommen, so daß Luft keinen Zutritt hat. Dadurch wird ein niedriger Sauerstoffgehalt in den sehr sauerstoffaffinen Pulvern gewährleistet, so daß eine Voraussetzung für gute Hartlöteigenschaften erfüllt ist.

Die Erfindung und weitere Vorteile werden nun anhand der Figuren der Zeichnung näher erläutert.
- Fig. 1: zeigt ein Diagramm des thermischen Ausdehnungskoeffizienten von hochreinem Aluminiumoxid und von einigen Aktivhartloten,
- Fig. 2: zeigt in der Form einer Tabelle verschiedene Eigenschaften bevorzugter Aktivhartlote, und
- Fig. 3: zeigt ein Diagramm zum Einfluß des Anteils an Eisen auf den thermischen Ausdehnungskoeffizienten einer Zirconium/Eisen/Titan-Legierung.

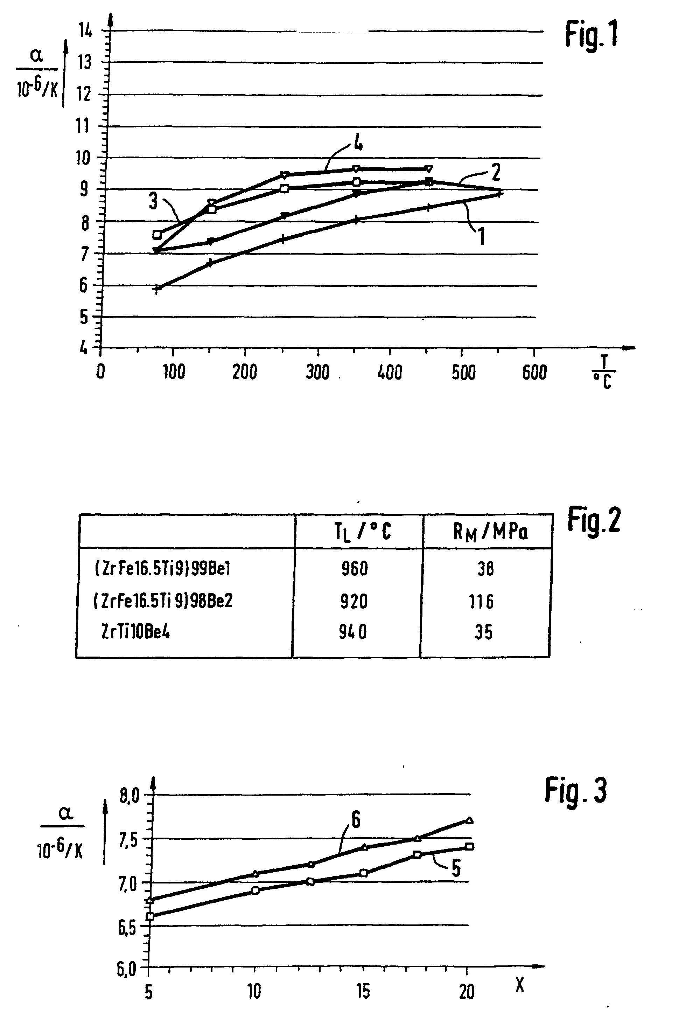

Das Diagramm der Fig. 1 zeigt in Abhängigkeit von der Temperatur Kurven von gemessenen Werten des thermischen Ausdehnungskoeffizienten α von hochreinem Aluminiumoxid, also von 99,9 %igem Aluminiumoxid, und von einigen Aktivhartloten im Temperaturbereich zwischen ca. 100 °C und ca. 600 °C. Dabei ist der thermische Ausdehnungskoeffizient α auf der Ordinate in 10⁻⁶/K und die Temperatur T auf der Abszisse in °C aufgetragen.

Die Kurve 1 zeigt den thermischen Ausdehnungskoeffizienten von hochreinem Aluminiumoxid, der zwischen ca. 6x10⁻⁶/K bei ca. 100 °C und ca. 9x10⁻⁶/K bei ca. 550 °C mit leicht negativer Krümmung verläuft.

Die Kurve 2 zeigt den thermischen Ausdehnungskoeffizienten einer Zirconium/Titan/Beryllium-Aktivhartlot-Legierung mit der Zusammensetzung ZrTi10Be4, welche Kurzschreibweise bekanntlich bedeutet, daß in der Legierung 10 Gew.% Titan (= Ti), 4 Gew.% Beryllium (= Be) und 86 Gew.% Zirconium (= Zr) enthalten sind. Die Kurve 2 verläuft zwischen ca. 7x10⁻⁶/K bei ca. 100 °C und ca. 9x10⁻⁶/K bei ca. 550 °C mit einem leichten Maximum von ca. 9,2x10⁻⁶/K bei ca. 450 °C.

Die Kurve 3 zeigt den thermischen Ausdehnungskoeffizienten einer Zirconium/Eisen/Titan/Beryllium-Aktivhartlot-Legierung mit der Zusammensetzung (ZrFe16,5Ti9)99Be1; das bedeutet, daß in der Legierung 1 Gew.% Beryllium (= Be) und 99 Gew.% eines Legierungsteils enthalten sind, der sich aus 16,5 Gew.% Eisen (= Fe), 9 Gew.% Titan (= Ti) und 74,5 Gew.% Zirconium zusammensetzt. Die Klammer von (ZrFe16,5Ti9)99Be1 läßt sich auch ausmultiplizieren, so daß sich auch schreiben läßt: ZrFe16,33Ti8,9Be1, also 1 Gew.% Beryllium, 16,33 Gew.% Eisen, 8,9 Gew.% Titan und 73,77 Gew.% Zirconium.

Die Kurve 3 verläuft zwischen ca. 7,5x10⁻⁶/K bei ca. 100 °C und ca. 9,2x10⁻⁶/K bei ca. 450 °C mit einem leichten Maximum von ca. 9,3x10⁻⁶/K bei ca. 350 °C.

Die Kurve 4 zeigt den thermischen Ausdehnungskoeffizienten einer Zirconium/Eisen/Titan/Beryllium-Aktivhartlot-Legierung mit der Zusammensetzung (ZrFe16,5Ti9)98Be2; das bedeutet, daß in der Legierung 2 Gew.% Beryllium (= Be) und 98 Gew.% eines Legierungsteils enthalten sind, der sich aus 16,5 Gew.% Eisen (= Fe), 9 Gew.% Titan (= Ti), und 74,5 Gew.% Zirconium zusammensetzt, oder ZrFe16,17Ti8,8Be2, also 1 Gew.% Beryllium, 16,17 Gew.% Eisen, 8,8 Gew.% Titan und 73,03 Gew.% Zirconium. Die Kurve 4 verläuft zwischen ca. 7x10⁻⁶/K bei ca. 100 °C und ca. 9,7x10⁻⁶/K bei ca. 350 °C.

Aus Fig. 1 ergibt sich, daß der Ausdehnungskoeffizient der zur Kurve 1 gehörenden Aktivhartlot-Legierung ZrTi10Be4 dem Ausdehnungskoeffizienten von hochreinem Aluminiumoxid am nächsten kommt und daß im gezeigten Temperaturbereich eine weitgehend konstante Differenz des Ausdehnungskoeffizienten der Aktivhartlot-Legierung von dem von Aluminiumoxid besteht, die lediglich ca. +0,8x10⁻⁶/K beträgt.

Allerdings hat diese Aktivhartlot-Legierung ZrTi10Be4 nach der Tabelle der Fig. 2 bei einer Löttemperatur T_{L} von 940 °C eine Zugfestigkeit R_{M} von ca. 35 MPa, die zwar brauchbar ist, aber noch nicht für die breite Palette möglicher Anwendungsfälle geeignet erscheint.

Den höchsten Wert der Zugfestigkeit R_{M} zusammen mit dem niedrigsten Wert der Löttemperatur T_{L} hat demgegenüber die Aktivhartlot-Legierung (ZrFe16,5Ti9)98Be2 entsprechend der Kurve 4 von Fig. 1 mit einem Wert von R_{M} ≈ 116 MPa und einem Wert T_{L} = 920 °C.

Zugleich ist der thermische Ausdehnungskoeffizient der Aktivhartlot-Legierung (ZrFe16,5Ti9)98Be2 im Temperatur-Bereich, in dem die Drucksensoren üblicherweise verwendet werden, nahezu gleich dem Ausdehnungskoeffizient der Aktivhartlot-Legierung ZrTi10Be₄.

Zur Bestätigung einer von den Erfindern aufgestellten Vermutung, daß die erwähnte gute Annäherung des thermischen Ausdehnungskoeffizienten α an den von Aluminiumoxid auf den Eisenanteil der Aktivhartlot-Legierungen zurückzuführen sein dürfte, zeigt die Fig 3. das Ergebnis von Messungen zur Ermittlung dieses Eisen-Einflusses. Hierzu wurden Zirconium/Eisen/Titan-Legierungen der Zusammensetzung ZrFeₓTi10 gewählt, worin der Index x den bei den Messungen veränderlichen Eisenanteil, wieder in Gew.%, angibt.

Die Kurve 5 von Fig. 3 gibt den jeweiligen thermischen Ausdehnungskoeffizienten zwischen 50 °C und 200 °C an und die Kurve 6 den jeweiligen Ausdehnungskoeffizienten zwischen 100 °C und 200 °C. Aus der praktisch konstanten Steigung der Kurven 5, 6 haben die Erfinder den Schluß gezogen, daß bei verschwindendem Eisengehalt x der Ausdehnungskoeffizient a am kleinsten ist, nämlich bei ca. 6,3x10⁻⁶/K liegt.

Das dürfte eine Erklärung sein für die im Vergleich zu den eisenhaltigen Legierungen der Kurven 3, 4 von Fig. 1 niedereren Werte des thermischen Ausdehnungskoeffizienten bei der eisenfreien Legierung ZrTi10Be4 nach Kurve 2 von Fig. 1.

## Patentansprüche

1. Drucksensor mit Keramikteilen aus Aluminiumoxid, **dadurch gekennzeichnet, daß** die Keramikteile durch Hartlöten mit einer quatemären Ti-Be-Fe-Zr-Aktivhartlot-Legierung miteinander verbunden sind, wobei die Legierung höchstens 12 Gew.% Titan, höchstens 8 Gew.% Beryllium, weniger als 16,5 Gew.% Eisen und als Rest Zirconium sowie gegebenenfalls natürliche Verunreinigungen enthält.

2. Drucksensor nach Anspruch 1, wobei die quaternäre Aktivhartlot-Legierung 8,6 Gew.% Titan, 4 Gew.% Beryllium und 15,8 Gew.% Eisen enthält.

3. Drucksensor nach Anspruch 1, wobei das quaternäre Aktivhartlot-Legierung 8,8 Gew.% Titan, 2 Gew.% Beryllium und 16,2 Gew.% Eisen enthält.

4. Drucksensor nach Anspruch 1, wobei das quaternäre Aktivhartlot-Legierung 8,9 Gew.% Titan, 1 Gew.% Beryllium und 16,3 Gew.% Eisen enthält.

5. Drucksensor mit Keramikteilen aus Aluminiumoxid, **dadurch gekennzeichnet, daß** die Keramikteile durch Hartlöten mit einer temären Ti-Be-Zr-Aktivhartlot-Legierung miteinander verbunden sind, wobei die Legierung höchstens 10 Gew.% Titan, 4 Gew.% Beryllium, und als Rest Zirconium sowie gegebenenfalls natürliche Verunreinigungen enthält.

## Claims

1. A pressure sensor with ceramic parts of aluminium oxide, **characterized in that** the ceramic parts are joined to one another by hard soldering with a quaternary Ti-Be-Fe-Zr active hard soldering alloy, wherein the alloy contains at most 12% by weight of titanium, at most 8% by weight of beryllium, less than 16·5% by weight of iron, and the remainder zirconium and possibly natural impurities.

2. A pressure sensor according to Claim 1, wherein the quaternary active hard soldering alloy contains 8·6% by weight of titanium, 4% by weight of beryllium and 15·8% by weight of iron.

3. A pressure sensor according to Claim 1, wherein the quaternary active hard soldering alloy contains 8·8% by weight of titanium, 2% by weight of beryllium and 16·2% by weight of iron.

4. A pressure sensor according to Claim 1, wherein the quaternary active hard soldering alloy contains 8·9% by weight of titanium, 1% by weight of beryllium and 16·3% by weight of iron.

5. A pressure sensor with ceramic parts of aluminium oxide, **characterized in that** the ceramic parts are joined to one another by hard soldering with a ternary Ti-Be-Zr active hard soldering alloy, wherein the alloy contains at most 10% by weight of titanium, 4% by weight of beryllium, and the remainder zirconium and possibly natural impurities.

## Revendications

1. Capteur de pression avec des pièces céramiques en oxyde d'aluminium, **caractérisé en ce que** les pièces céramiques sont reliées ensemble par brasage fort avec un alliage quaternaire de métaux d'apport de brasage fort actifs Ti-Be-Fe-Zr, l'alliage contenant au maximum 12 % en poids de titane, au maximum 8 % en poids de béryllium, moins de 16,5 % en poids de fer et le reste de zirconium ainsi que, le cas échéant, des impuretés naturelles.

2. Capteur de pression selon la revendication 1, l'alliage quaternaire de métaux d'apport de brasage fort actifs contenant 8,6 % en poids de titane, 4 % en poids de béryllium et 15,8 % en poids de fer.

3. Capteur de pression selon la revendication 1, l'alliage quaternaire de métaux d'apport de brasage fort actifs contenant 8,8 % en poids de titane, 2 % en poids de béryllium et 16,2 % en poids de fer.

4. Capteur de pression selon la revendication 1, l'alliage quaternaire de métaux d'apport de brasage fort actifs contenant 8,9 % en poids de titane, 1 % en poids de béryllium et 16,3 % en poids de fer.

5. Capteur de pression avec des pièces céramiques en oxyde d'aluminium, **caractérisé en ce que** les pièces céramiques sont reliées ensemble par brasage fort avec un alliage ternaire de métaux d'apport de brasage fort actifs Ti-Be-ZR, l'alliage contenant au maximum 10 % en poids de titane, 4 % en poids de béryllium et le reste de zirconium ainsi que, le cas échéant, des impuretés naturelles.
